# EUROPEAN PATENT APPLICATION

(11) **EP 0 972 958 A2**
(43) Date of publication of application: **19.01.2000**
(21) Application number: 99113034.5
(22) Date of filing: 06.07.1999
(51) Int. Cl.: F16C 13/00, F16C 13/02

(54) **A bearing unit for a plastic pulley**

(30) Priority: 07.07.1998 IT TO980594
(71) Applicant: SKF INDUSTRIE S.p.A., I-10123 Torino (IT)
(72) Inventor: Pairone, Gianfranco, 10146 Torino (IT); Sirolli, Gerardo, 03020 Isoletta (Frosinone) (IT)
(74) Representative: Fioravanti, Corrado

(57) **Abstract**

A bearing unit for a pulley, particularly for use as a belt tensioner, comprises an outer race (13) adapted to be co-moulded with a plastic material to form an outer wheel element (11) fast for rotation with said bearing outer race (13). Formed in the outer cylindrical surface (12) of the outer race (13) is a groove (14) eccentric to the bearing axis of rotation (x). The groove (14) produces in the co-moulded plastic material a complementary portion (19) preventing relative rotation between the outer wheel element (11) and the bearing outer race (13).

## Description

The present invention refers to a bearing unit for a plastic pulley, particularly for use as a belt tensioner, of the type comprising an outer wheel element made of plastic material co-moulded onto the outer race of a bearing for rotating fast therewith.

It is known to use pulleys of the above kind, especially for applications as belt tensioners with motor vehicle engines. With pulleys of this kind, an outer wheel body of plastic material is co-moulded onto the outer race of a standard-type bearing, i.e. having an essentially smooth outer cylindrical surface.

An inconvenience encountered with this kind of pulley is that, owing to the different thermal expansion coefficients of steel and plastic, the plastic outer wheel body tends to rotate slowly relative to the outer race of the bearing. This phenomenon is known in the field as "creeping".

Relative rotation between the plastic of the pulley and the steel of the bearing provokes a quick wear of the plastic for friction, whereby the pulley becomes noisy and inevitably subjected to failure.

U.S. Pat. No. 4,511,191 discloses a device for preventing relative rotation of the outer race of a bearing relative to an outer housing supporting the bearing outer race. The bearing outer race has a circumferential groove formed in its outer periphery eccentrically thereof and having fitted therein a bandlike resilient ring which has a curved protruding portion larger than the depth of the groove. In the vicinity of the protruding portion, the bandlike resilient ring has its opposite end portions lapped over each other within the groove. When the outer race tends to slowly rotate or "creep" within the outer housing the shallow groove portion of the groove approaches the protruding portion and lapped end portions of the bandlike ring, causing the end portions to act as a wedge between the housing and the outer race to stop the relative rotating motion.

To solve the above discussed creeping problem, there has been proposed another solution, according to which a groove is formed in the outer surface of the bearing outer race and a resin portion is provided in the groove, the resin having a linear expansion coefficient higher than that of aluminium, the material which an outer body mounted on the bearing is made of. The bearing outer race is so locked for rotation relative to the outer body owing to the friction exerted by the resin portion, when this is thermally expanded.

The above solutions, although solving the problem of relative rotation (creeping), require the manufacturing of additional friction elements to be inserted between the bearing and the outer body accommodating the bearing, and have turned out to be expensive and requiring a long time for assembling.

It is an object of the present invention to provide a bearing unit for plastic pulleys, well-known as being inexpensive to manufacture, wherein the outer wheel body is secured to the outer race of the bearing as a single body for rotating fast therewith.

This object is achieved, in accordance with the present invention, by a bearing unit having the features as defined in appended claim 1. Other important features are defined in the dependent claims.

Further constructional and functional features and advantages of a preferred embodiment of the invention will be apparent from the ensuing detailed description, reference being made to the accompanying drawings given by way of example, in which:
- Fig. 1 is a radial cross-sectional view of a pulley provided with a bearing unit in accordance with the present invention; and
- Fig. 2 is an axial cross-section taken along the line II-II of Fig. 1.

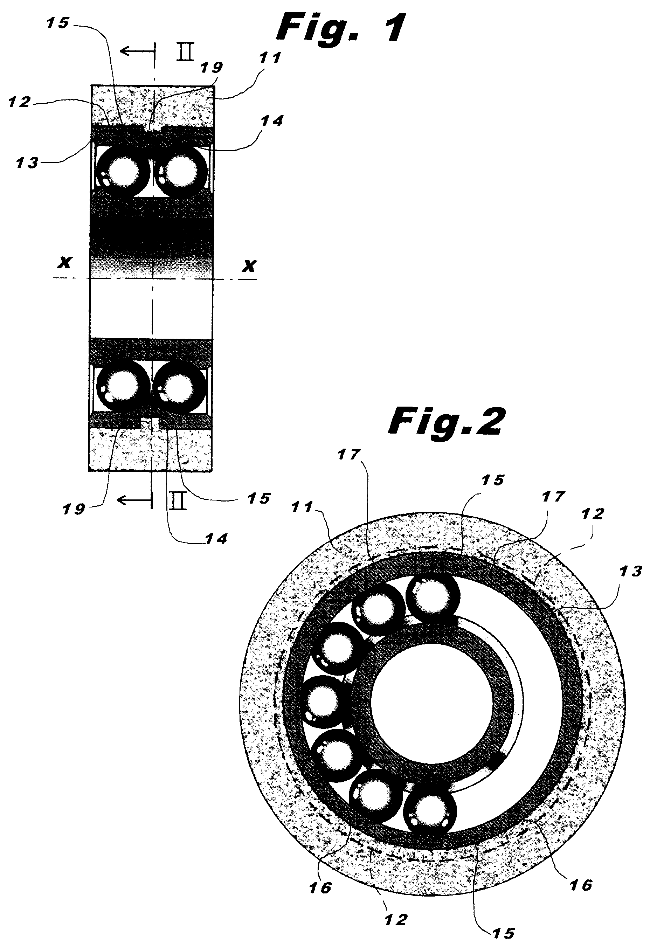

With reference to Figures 1 and 2, a pulley includes an outer wheel body 11 of plastic material co-moulded onto the outer cylindrical surface 12 of an outer race 13 of a rolling bearing unit having a central axis of rotation x.

Formed in the outer surface 12 of the race 13 is a radial groove 14 having a bottom 15 eccentric to the central axis x of rotation of the bearing. The co-moulding of the plastic material forming the outer wheel body 11, preferably but not exclusively nylon 6.6, produces a plastic portion 19 complementary to the groove 14. There is so provided a form coupling that locks the outer wheel body 11 integral with the outer bearing race 13 preventing relative rotation therebetween in the circumferential direction. If, after some time, the plastic co-moulded onto the bearing should no longer adhere to the steel of the bearing, the eccentric portion 19 is urged tangentially against the bearing groove 14, whereby the wheel 11 and the outer race 13 will nevertheless rotate as a unit.

As in the preferred embodiment shown in the drawings, the diameter of the groove 14 may be considerably shorter than that of the cylindrical surface 12, so as to extend with continuity along the bearing circumference. In an alternative embodiment, not shown, the groove 14 may be partial, i.e. formed so as to emerge tangentially in one point or along an arch of the surface 12. According to a further variant, not shown, instead of being continuous as in the example of Figures 1 and 2, the groove 14 may be formed discretely along the peripheral surface 12 of the race 13, still attaining a form coupling with a result equivalent to that of the embodiment depicted in the drawings.

In any case, the groove (or groove portions) formed in the outer race 13 provides, along the circumference of surface 12, distinct zones having radially different distances from the bearing axis. In other words, there can be distinguished deeper zones 16 where the bottom 15 of the groove 14 is nearer to the central axis x, and shallower zones 17 where the bottom of the groove is farther from the axis x.

It will be appreciated that rotational locking of the outer wheel body 11 relative to the bearing outer race 13 is assured in either direction of rotation of the pulley.

While a specific embodiment of the invention have been disclosed, it is to be understood that such disclosure has been merely for the purpose of illustration and that the invention is not to be limited in any manner thereby. Various modifications as to the shape and location of parts, and constructional and functional details will be apparent to those skilled in the art in view of the foregoing example.

## Claims

1. A bearing unit for a pulley, particularly for use as a belt tensioner, comprising an outer race (13) adapted to be co-moulded with a plastic material to form an outer wheel element (11) fast for rotation with said bearing outer race (13), characterised in that a groove (14) eccentric to the bearing axis of rotation (x) is formed in the outer cylindrical surface (12) of said outer race (13), whereby said groove (14) produces in the co-moulded plastic material a complementary portion (19) preventing relative rotation between the outer wheel element (11) and the bearing outer race (13).

2. A bearing unit as claimed in claim 1, characterised in that the eccentric groove (14) has a smaller diameter than that of said outer cylindrical surface (12).

3. A bearing unit as claimed in claim 1, characterised in that the eccentric groove (14) is continuous along said outer cylindrical surface (12).

4. A bearing unit as claimed in claim 1, characterised in that the eccentric groove (14) is discrete along said outer cylindrical surface (12).
